# EUROPÄISCHE PATENTANMELDUNG

(11) **EP 4 383 533 A1**
(43) Veröffentlichungstag der Anmeldung: **12.06.2024**
(21) Anmeldenummer: 22211408.4
(22) Anmeldetag: 05.12.2022
(51) Int. Cl.: H02M 1/00, H02M 7/483

(54) **MODULARER GLEICHSPANNUNGSWANDLER**

(71) Anmelder: Siemens Aktiengesellschaft, 80333 München (DE)
(72) Erfinder: Hofmann, Viktor, 95448 Bayreuth (DE); Hofstetter, Patrick, 91056 Erlangen (DE)
(74) Vertreter: Siemens Patent Attorneys

(57) **Zusammenfassung**

Die Erfindung betrifft einen modularen Gleichspannungswandler (1) aufweisend eine erste Gleichspannungsseite (2), eine zweite Gleichspannungsseite (3), einen ersten Modularm (4) und einen zweiten Modularm (5). Dabei weist der modulare Gleichspannungswandler (1) ferner einen dritten Modularm (11), einen vierten Modularm (12) und einen fünften Modularm (13) auf, wobei zwischen den zwei ersten Gleichspannungsanschlüssen (21,22) der erste Modularm (4) und der vierte Modularm (12) in Reihe angeordnet sind, wobei zwischen den zwei zweiten Gleichspannungsanschlüssen (31,32) der zweite Modularm (5) und der fünfte Modularm (13) in Reihe angeordnet sind, wobei der erste Modularm (4), der zweite Modularm (5) und der dritte Modularm (11) derart in Reihe angeordnet sind, dass sich eine Masche (6) bildet, wobei zwischen den jeweiligen Modularmanschlüssen jeweils Submodule (9) in einer Reihenschaltung angeordnet sind, wobei der erste Modularm (4) und der zweite Modularm (5) eingerichtet sind, jeweils eine Spannung (u_{M1},u_{M2}) zu erzeugen, die einen Gleichspannungsanteil und einen Wechselspannungsanteil mit einer ersten Frequenz (f₁) aufweist. Die Erfindung betrifft ferner ein Gleichspannungsnetz (10) mit einem derartigen Gleichspannungswandler (1). Weiter betrifft die Erfindung ein Verfahren zum Betreiben eines derartigen modularen Gleichspannungswandlers (1) oder eines derartigen Gleichspannungsnetzes (10).

## Beschreibung

Die Erfindung betrifft einen modularen Gleichspannungswandler aufweisend eine erste Gleichspannungsseite mit zwei ersten Gleichspannungsanschlüssen und eine zweite Gleichspannungsseite mit zwei zweiten Gleichspannungsanschlüssen. Ferner betrifft die Erfindung ein Gleichspannungsnetz mit einem derartigen modularen Gleichspannungswandler und einer Gleichspannungsquelle. Weiter betrifft die Erfindung ein Verfahren zum Betreiben eines derartigen modularen Gleichspannungswandlers oder eines derartigen Gleichspannungsnetzes.

Ein Gleichspannungswandler dient zum Umwandeln einer an den zwei ersten Gleichspannungsanschlüssen einer ersten Gleichspannungsseite anliegenden ersten Gleichspannung in eine an den zwei zweiten Gleichspannungsanschlüssen einer zweiten Gleichspannungsseite anliegenden zweiten Gleichspannung. Dabei wird elektrische Energie zwischen der ersten und der zweiten Gleichspannungsseite übertragen.

Gleichspannungswandler erlauben es, Gleichspannungsnetze mit unterschiedlicher Spannung miteinander zu verbinden. Ebenso ermöglicht es der Gleichspannungswandler, einen oder mehrere Verbraucher mit einem Gleichspannungsnetz zu verbinden, wobei Verbraucher und Gleichspannungsnetz unterschiedliche Betriebsspannungen aufweisen.

Ein Gleichspannungswandler wird auch als Gleichstromsteller, DC/DC Wandler, DC/DC Konverter oder DC/DC Chopper bezeichnet.

Gleichspannungsnetze gewinnen in der heutigen Zeit vor dem Hintergrund der aktuellen Technologielandschaft zunehmend an Bedeutung. Sie werden bei der hocheffizienten Übertragung großer Energiemengen eingesetzt oder dienen als Sammelnetze für Photovoltaik- oder Windenergieanlagen. Ebenso kommen sie, unter anderem auch aufgrund der vorangetriebenen Dekarbonisierung, immer häufiger als Schiffsnetze oder in der automobilen Ladeinfrastruktur zum Einsatz. Die Vorteile liegen hierbei beispielsweise in der erhöhten Effizienz und Energiedichte, einer möglichen Reduktion von Schaltanlagen und passiven Leistungskomponenten sowie einer leichteren Integration von Batterien oder Brennstoffzellen. Eine wichtige Schlüsseltechnologie zur Realisierung solcher Netze bilden die Gleichspannungswandler. Diese Geräte zur Anpassung unterschiedlicher Gleichspannungen ermöglichen die Netzanbindung von Betriebsmitteln und erlauben einen Energieaustausch zwischen Netzen unterschiedlicher Spannungsebenen.

Üblicherweise wird bei einem DC/DC Steller die Gleichspannung in eine Wechselspannung gewandelt. Mit Hilfe eines Transformators wird das Spannungsniveau angepasst und anschließend die Wechselspannung mittels eines Gleichrichters wieder in eine Gleichspannung gewandelt. Je nach Art der Umwandlung in Wechselspannung und Gleichspannung kann der Gleichspannungswandler Energie in nur eine Richtung oder in beide Richtungen übertragen.

Im Folgenden wird der Begriff "in Reihe angeordnet" verwendet, wenn die einzelnen Spannungen der in Reihe angeordneten Komponenten sich addieren und die Summe dieser einzelnen Spannungen als Gesamtspannung über diesen Elementen anliegt. Dazu müssen diese Elemente nicht notwendigerweise vom gleichen Strom durchflossen werden. Zwischen den Elementen kann eine Verzweigung für den Strom angeordnet sein. Bei einer Reihenschaltung werden die in einer Reihenschaltung angeordneten Komponenten auch vom gleichen Strom durchflossen.

Eine Masche bezeichnet in der Elektrotechnik einen über elektrische Komponenten oder allgemein über Zweige geschlossenen Umlauf. Die Summe der Spannungen über alle Komponenten oder Zweige einer Masche ist immer gleich null.

Der Erfindung liegt die Aufgabe zugrunde, einen modularen Gleichspannungswandler zu verbessern.

Diese Aufgabe wird durch einen modularer Gleichspannungswandler, aufweisend eine erste Gleichspannungsseite mit zwei ersten Gleichspannungsanschlüssen, eine zweite Gleichspannungsseite mit zwei zweiten Gleichspannungsanschlüssen, einen ersten Modularm mit zwei ersten Modularmanschlüssen, einen zweiten Modularm mit zwei zweiten Modularmanschlüssen, einen dritten Modularm mit zwei dritten Modularmanschlüssen, einen vierten Modularm mit zwei vierten Modularmanschlüssen und einen fünften Modularm mit zwei fünften Modularmanschlüssen gelöst, wobei zwischen den zwei ersten Gleichspannungsanschlüssen der erste Modularm und der vierte Modularm in Reihe angeordnet sind, wobei zwischen den zwei zweiten Gleichspannungsanschlüssen der zweite Modularm und der fünfte Modularm in Reihe angeordnet sind, wobei der erste Modularm, der zweite Modularm und der dritte Modularm derart in Reihe angeordnet sind, dass sich eine Masche bildet, wobei der vierte Modularm und der fünfte Modularm jeweils außerhalb der Masche angeordnet sind, wobei zwischen den zwei ersten Modularmanschlüssen des ersten Modularms eine erste Anzahl von Submodulen in einer Reihenschaltung angeordnet ist, zwischen den zwei zweiten Modularmanschlüssen des zweiten Modularms eine zweite Anzahl von Submodulen in einer Reihenschaltung angeordnet ist, zwischen den zwei dritten Modularmanschlüssen des dritten Modularms eine dritte Anzahl von Submodulen in einer Reihenschaltung angeordnet ist, zwischen den zwei vierten Modularmanschlüssen des vierten Modularms eine vierte Anzahl von Submodulen in einer Reihenschaltung angeordnet ist, zwischen den zwei fünften Modularmanschlüssen des fünften Modularms eine fünfte Anzahl von Submodulen in einer Reihenschaltung angeordnet ist, wobei die Submodule jeweils mindestens zwei Halbleiterschalter und mindestens einen Modulkondensator umfassen, wobei mindestens ein Submodule des vierten und fünften Modularms jeweils mindestens vier Halbleiterschalter und mindestens einen Modulkondensator umfasst, wobei der erste und der zweite Modularm eingerichtet sind, jeweils eine Spannung zu erzeugen, die einen Gleichspannungsanteil und einen Wechselspannungsanteil mit einer ersten Frequenz aufweist, wobei der dritte Modularm eingerichtet ist, eine Spannung zu erzeugen, die einen Gleichspannungsanteil aufweist, wobei der vierte und der fünfte Modularm eingerichtet sind, jeweils eine Spannung zu erzeugen, die einen Wechselspannungsanteil mit einer ersten Frequenz aufweist. Weiter wird diese Aufgabe durch ein Gleichspannungsnetz mit mindestens einem derartigen modularen Gleichspannungswandler und einer Gleichspannungsquelle gelöst, wobei der modulare Gleichspannungswandler eine elektrische Komponente mit der Spannungsquelle elektrisch verbindet, wobei die Gleichspannungsquelle und die elektrische Komponente unterschiedliche Betriebsspannungen aufweisen. Diese Aufgabe wird ferner durch ein Verfahren zum Betreiben eines derartigen modularen Gleichspannungswandlers oder eines derartigen Gleichspannungsnetzes gelöst, wobei der erste Modularm und der zweite Modularm jeweils eine Spannung mit einem Gleichspannungsanteil und einem Wechselspannungsanteil mit einer ersten Frequenz erzeugen, wobei sich der Gleichspannungsanteil und der Wechselspannungsanteil derart überlagern, dass der jeweilige Gleichspannungsanteil und der jeweilige Wechselspannungsanteil als Summe zwischen den Modularmanschlüssen des jeweiligen Modularms anliegen, wobei der vierte Modularm und der fünfte Modularm jeweils eine Spannung mit einem Wechselspannungsanteil mit der ersten Frequenz derart erzeugen, dass die Spannungshöhe des Wechselspannungsanteil, insbesondere die Amplitude des Wechselspannungsanteils, des vierten Modularms identisch ist mit der Spannungshöhe des Wechselspannungsanteil, insbesondere mit der Amplitude des Wechselspannungsanteils, des ersten Modularms, eine Phasenverschiebung zwischen dem Wechselspannungsanteil des ersten Modularms und dem Wechselspannungsanteil des vierten Modularms einen Wert von 180° annimmt, die Spannungshöhe des Wechselspannungsanteil, insbesondere die Amplitude des Wechselspannungsanteils, des fünften Modularms identisch ist mit der Spannungshöhe des Wechselspannungsanteil, insbesondere mit der Amplitude des Wechselspannungsanteils, des zweiten Modularms, eine Phasenverschiebung zwischen dem Wechselspannungsanteil des zweiten Modularms und dem Wechselspannungsanteil des fünften Modularms einen Wert von 180° annimmt, wobei der dritte Modularm eine Spannung mit einem Gleichspannungsanteil erzeugt, die derart eingerichtet ist, einen Gleichstrom zwischen den ersten Gleichspannungsanschlüssen der ersten Gleichspannungsseite und den zweiten Gleichspannungsanschlüssen der zweiten Gleichspannungsseite zu verhindern.

Weitere vorteilhafte Ausgestaltungen der Erfindung sind in den abhängigen Ansprüchen angegeben.

Der Erfindung liegt unter anderem die Erkenntnis zugrunde, dass sich ein Gleichspannungswandler durch fünf Modularme realisieren lässt. Dabei erzeugen der erste und der zweite Modularm eine Spannung, die einen Gleichspannungsanteil und einen Wechselspannungsanteil aufweisen. Diese Spannungsanteile überlagern sich additiv, so dass zwischen den jeweiligen Modularmanschlüssen jeweils die Summe aus Gleichspannungsanteil und Wechselspannungsanteil mit einer ersten Frequenz anliegt. Darüber hinaus können noch weitere Spannungsanteile dem Gleichspannungsanteil und dem Wechselspannungsanteil überlagert werden. Die zwei Wechselspannungsanteile der zwei Modularme haben dabei die gleiche Frequenz. Mit dieser Frequenz wird Leistung zwischen dem ersten und dem zweiten Modularm und damit auch zwischen den beiden Gleichspannungsseiten ausgetauscht.

Zwischen den Gleichspannungsanschlüssen der jeweiligen Gleichspannungsseite fließt ein Gleichstrom. Dieser kann durch den Gleichspannungsanteil des jeweiligen Modularms gesteuert oder geregelt werden. Dabei steuert oder regelt der Gleichspannungsanteil des ersten Modularms den Gleichstrom an der ersten Gleichspannungsseite und der Gleichspannungsanteil des zweiten Modularms den Gleichstrom an der zweiten Gleichspannungsseite. Dazu ist es vorteilhaft, aber nicht zwingend erforderlich, wenn zwischen den ersten Gleichspannungsanschlüssen und zwischen den zweiten Gleichspannungsanschlüssen jeweils eine Induktivität, beispielsweise eine Modularminduktivität im ersten und zweiten Modularm, vorhanden ist. Anstelle der Modularminduktivität können auch parasitäre Induktivitäten in den einzelnen Verbindungen genutzt werden. Über der Induktivität wird mittels der Modularme eine Spannung erzeugt, die einen Strom verursacht.

Die Bezeichnung der Modularminduktivität beschreibt die Anordnung der Induktivität im modularen Gleichspannungswandler und gibt keinerlei Auskunft über den Aufbau oder die Ausgestaltung der entsprechenden Induktivität.

Über dieser Induktivität wird jeweils ein entsprechender Gleichspannungsabfall erzeugt, mit dem der entsprechende Gleichstrom gesteuert oder geregelt wird. Neben dem Gleichstrom kann alternativ oder ergänzend beispielsweise in einem überlagerten Regelkreis die Leistung an der jeweiligen Gleichspannungsseite oder die Gleichspannung geregelt werden. Bei der Verbindung zweier Teilnetze eines Gleichspannungsnetzes, wobei die Teilnetze unterschiedliche Betriebsspannungen aufweisen, kann es vorteilhaft sein, den Leistungsaustausch zwischen den beiden Teilnetzen zu steuern oder zu regeln. Falls es sich bei einem der Teilnetze um ein Inselnetz handelt, kann es auch vorteilhaft sein, die Spannung des Teilnetzes, das als Inselnetz ausgebildet ist, zu steuern oder zu regeln.

Dabei kann in einer einfachen Ausgestaltung das erste Teilnetz eine Gleichspannungsquelle umfassen und das zweite Teilnetz eine elektrische Komponente, wie beispielsweise einen elektrischen Verbraucher, umfassen. Durch den modularen Gleichspannungswandler ist es möglich, die elektrische Komponente mit dem ersten Teilnetz, insbesondere mit der Spannungsquelle des ersten Teilnetzes zu verbinden, auch wenn die Gleichspannungsquelle und die elektrische Komponente unterschiedliche Betriebsspannungen haben. Der modulare Gleichspannungswandler im Gleichspannungsnetz passt die unterschiedlichen Betriebsspannungen aneinander an, indem er Energie aus der Spannungsquelle mit einer veränderten Betriebsspannung an den elektrischen Verbraucher überträgt.

Der Wechselspannungsanteil dient dazu, elektrische Energie von der ersten Gleichspannungsseite zur zweiten Gleichspannungsseite zu übertragen und umgekehrt. Dabei verhindert der vierte Modularm, dass sich ein Wechselstrom zwischen den zwei ersten Gleichspannungsanschlüssen der ersten Gleichspannungsseite ausbildet. Durch den fünften Modularm wird verhindert, dass sich ein Wechselstrom zwischen den zwei zweiten Gleichspannungsanschlüssen der zweiten Gleichspannungsseite ausbildet. Ebenso wird durch den vierten Modularm ein Wechselspannungsanteil an den ersten Gleichspannungsanschlüssen und durch den fünften Modularm ein Wechselspannungsanteil an den zweiten Gleichspannungsanschlüssen vermieden oder zumindest hinreichend unterdrückt.

Dazu erzeugt der vierte Modularm einen Wechselspannungsanteil, der von den ersten Gleichspannungsanschlüssen aus betrachtet dem Wechselspannungsanteil des ersten Modularms entgegenwirkt und diesen kompensiert. Gleichzeitig erzeugt der vierte Modularm einen Wechselspannungsanteil, der von den ersten Gleichspannungsanschlüssen aus betrachtet dem Wechselspannungsanteil des ersten Modularms entgegenwirkt und diesen kompensiert.

Der Energieaustausch von der ersten Gleichspannungsseite zur zweiten Gleichspannungsseite erfolgt dabei mittels der durch die Modularme erzeugten Wechselspannung und einem Wechselstrom in der Masche. Die durch die Modularme erzeugten Wechselspannungsanteile müssen für die Energieübertragung die gleiche Frequenz aufweisen. Diese Frequenz wird als erste Frequenz bezeichnet. Zur Verhinderung eines Gleichstroms zwischen der ersten Gleichspannungsseite und der zweiten Gleichspannungsseite ist in der Masche der dritte Modularm vorgesehen. Der dritte Modularm verhindert die Ausbildung eines Gleichstroms zwischen den ersten Gleichspannungsanschlüssen und den zweiten Gleichspannungsanschlüssen des modularen Gleichspannungswandlers. Dazu erzeugt er eine Spannung, die der Differenz der Spannung an den ersten Gleichspannungsanschlüssen und den zweiten Gleichspannungsanschlüssen entspricht. Mit anderen Worten erzeugt der dritte Modularm einen Gleichspannungsanteil, der der Differenz der Spannung an den ersten Gleichspannungsanschlüssen und der Spannung an den zweiten Gleichspannungsanschlüssen entspricht. Wechselströme lässt der dritte Modularm passieren. Durch einen geringen Wechselspannungsanteil in der Spannung des Dritten Modularms können elektrische Verluste beim Betrieb des dritten Modularms kompensiert werden.

Der dritte Modularm kann beispielsweise ausschließlich unipolarer Submodule aufweisen. Mit anderen Worten können die Submodule des dritten Modularms beispielsweise als Halbbrückenmodule oder Doppelhalbbrückenmodule ausgebildet sein. Diese Ausführung macht den dritten Modularm besonders kostengünstig. Um einen Wirkleistungsaustausch zu erzeugen ist es beispielsweise bei vorhandenen Modularminduktivitäten im ersten und/oder zweiten Modularm vorteilhaft, wenn der Wechselspannungsanteil des ersten Modularms zum Wechselspannungsanteil des zweiten Modularms eine Phasenverschiebung, auch als Phasenversatz bezeichnet, aufweist.

Bei dem modularen Gleichspannungswandler kann für einen einfachen und kostengünstigen Aufbau ein erster Verbindungspunkt zwischen dem ersten Modularm und dem dritten Modularm direkt oder über den vierten Modularm mit einem der zwei ersten Gleichspannungsanschlüsse verbunden sein. Ebenso kann ein zweiter Verbindungspunkt zwischen zweiten Modularm und dem dritten Modularm direkt oder über den fünften Modularm mit einem der zwei zweiten Gleichspannungsanschlüsse verbunden sein.

Besonders vorteilhaft ist der Einsatz des Gleichspannungswandlers oder mehrerer Gleichspannungswandler, also mindestens eines Gleichspannungswandlers in einem Gleichspannungsnetz. Der Gleichspannungswandler ermöglicht es, Komponenten mit unterschiedlicher Betriebsspannung im Gleichspannungsnetz zu verbinden. Dabei kann ein elektrischer Verbraucher oder Energiespeicher über einen Gleichspannungswandler mit dem Gleichspannungsnetz verbunden werden. Mit dem Gleichspannungswandler ist es darüber hinaus möglich, den Energieaustausch und die Leistung zwischen Teilen des Gleichspannungsnetzes zu steuern oder zu regeln

In einer Ausgestaltung, bei der das Gleichspannungsnetz zwei Teilnetze mit unterschiedlicher Betriebsspannung aufweist, ergibt sich eine vorteilhafte Ausgestaltung, wenn der modulare Gleichspannungswandler mit den ersten zwei Gleichspannungsanschlüssen mit dem ersten der zwei Teilnetze verbunden ist und mit den zweiten zwei Gleichspannungsanschlüsse mit dem zweiten der zwei Teilnetze elektrisch verbunden ist. Damit ist ein Energieaustausch in beiden Richtungen zwischen den Teilnetzen möglich. Die Teilnetze können dabei unterschiedliche Betriebsspannungen aufweisen.

Allgemein eignet sich der modulare Gleichspannungswandler in einem Gleichspannungsnetz dazu, einen elektrischen Verbraucher, eine Energiequelle oder einen Energiespeicher mit einem Teilnetz des Gleichspannungsnetzes zu verbinden. Das Gleichspannungsnetz bzw. das Teilnetz kann dabei weitere Verbraucher, weitere Energiequellen und/oder Energiespeicher aufweisen. Der modulare Gleichspannungswandler kann dem elektrischen Verbraucher, der Energiequelle und/oder dem Energiespeicher die für dessen Betrieb erforderliche Spannung bereitstellen. Dazu kann die Spannung an der Gleichspannungsseite, an der der elektrische Verbraucher, die Energiequelle oder der Energiespeicher mit den Gleichspannungsanschlüssen der betreffenden Gleichspannungsseite verbunden ist, geregelt oder gesteuert werden. Alternativ ist es möglich, mittels des Gleichspannungswandlers die elektrische Leistung zwischen dem Teilnetz und dem elektrischen Verbraucher, der Energiequelle und/oder dem Energiespeicher zu steuern oder zu regeln.

Der modulare Gleichspannungswandler kann darüber hinaus eingesetzt werden, zwei DC-Netze mit beliebiger Spannungsebenen miteinander zu verbinden und einen bidirektionalen Leistungsaustausch zu ermöglichen. Die erste Gleichspannungsseite kann beispielsweise als Oberspannungsseite genutzt werden, während die zweiten Gleichspannungsanschlüsse die Unterspannungsseite des Gleichspannungswandlers darstellen.

Der Aufbau des Gleichspannungswandlers umfasst im Wesentlichen fünf Modularme. Die Modularme werden aufgrund ihrer Ausgestaltung mit einer Reihenschaltung von Submodulen auch als M2C-Arme bezeichnet. Die Modularme weisen mindestens ein Submodul auf. Die Submodule sind in einer Reihenschaltung zwischen den zwei Modularmanschlüssen angeordnet. Der Begriff der Reihenschaltung soll auch den Fall von einem Submodul umfassen, das mit seinen Anschlüssen dann mit den Modularmanschlüssen verbunden ist. Die Reihenschaltung kann eine beliebige Anzahl von Submodulen, also auch ein Submodul, aufweisen. Mit anderen Worten ist die Anzahl der Submodule größer oder gleich eins. Als Submodule eignen sich alle bekannten Ausführungsformen von Submodulen.

Die Anzahlen der Submodule in den unterschiedlichen Modularmen kann sich dabei unterscheiden. Sie hängt unter anderem von den zu erzeugenden Spannungen ab.

Eine erste Ausführung eines Submoduls weist zwei Halbleiterschalter und einen Modulkondensator auf. Damit kann an den Anschlüssen des Submoduls eine Spannung null oder die an dem Modulkondensator anliegende Spannung bereitgestellt werden. Ein Submodul mit vier Halbleiterschaltern erlaubt die Bereitstellung der Spannung null, der positiven Spannung des Modulkondensators und die negative Spannung des Modulkondensators an den Anschlüssen des Submoduls. Die Verwendung mehrerer Modulkondensatoren erlaubt die Bereitstellung unterschiedlicher Kondensatorspannungen an den Anschlüssen des Submoduls.

Die beispielhaft genannten Varianten des Submoduls werden auch als Halbbrückenmodul, Vollbrückenmodul und Doppelsubmodul bezeichnet.

Der erste Modularm und der zweite Modularm modulieren vorgegebene Spannungssollwerte, die den Gleichspannungsanteil und den Wechselspannungsanteil aufweisen, und können vereinfacht als ideale Spannungsquellen angesehen werden.

Im stationären Zustand kann vom ersten Modularm beispielsweise die oberspannungsseitige DC-Spannung und vom zweiten Modularm die unterspannungsseitige DC-Spannung moduliert werden. Durch die Modulation einer zusätzlichen DC-Spannung, die zu einem Spannungsabfall über der ersten Induktivität bzw. der zweiten Induktivität führt, kann der jeweilige Gleichstrom auf der ersten Gleichspannungsseite bzw. auf der zweiten Gleichspannungsseite aktiv geregelt werden. Die Summe aus DC-Spannung und zusätzlicher DC-Spannung bildet den Gleichspannungsanteil, der von dem jeweiligen Modularm erzeugt wird.

Um den Energieaustausch zwischen den beiden Gleichspannungsseiten des Gleichspannungswandlers zu realisieren und auch das Energiegleichgewicht an den beiden Modularmen sicherzustellen, wird von den beiden Modularmen jeweils neben dem Gleichspannungsanteil bzw. den DC Spannungen ein Wechselspannungsanteil moduliert. Die Frequenz des Wechselspannungsanteils wird als erste Frequenz bezeichnet. Diese erste Frequenz ist für den Wechselspannungsanteil des ersten Modularms und den Wechselspannungsanteil des zweiten Modularms gleich. Durch die Wechselspannungsanteile fällt aufgrund unterschiedlicher Amplitude und/oder Phasenlange der Wechselspannungsanteile in der Masche eine zusätzliche AC Spannung über den parasitären Elemente der Masche ab. Zur besseren Steuer- oder Regelbarkeit kann in dem ersten Modularm und/oder in dem zweiten Modularm eine Modularminduktivität integriert werden. Diese zusätzliche AC-Spannung mit erster Frequenz prägt einen Wechselstrom in die Masche ein. Die zusätzliche AC Spannung kann entweder von dem ersten Modularm, dem zweiten Modularm oder vom ersten und zweiten Modularm erzeugt werden oder auf beide Modularme beliebig verteilt werden. Der Wechselspannungsanteil setzt sich somit aus einer für beide Modularme gleichen AC Spannung und dem Anteil zur Erzeugung der zusätzlichen AC-Spannung zusammen. Die von den Modularmen erzeugte AC-Spannungen sowie die zusätzliche AC Spannung bzw. zusätzlichen AC Spannungen haben dabei die gleiche Frequenz, die erste Frequenz. Die Summe aus AC Spannung und dem Anteil zur Erzeugung der zusätzlichen AC Spannung bildet den Wechselspannspannungsanteil der von dem jeweiligen Modularm erzeugt wird.

Die Frequenzwahl für die erste Frequenz kann beliebig erfolgen. Höhere Frequenzen führen zu erhöhten Schalt- und Leiterverlusten, verringern jedoch die Oberschwingungen insbesondere beim Energieaustausch in den Modulkondensatoren. Ebenfalls kann die Amplitude des Wechselspannungsanteils frei bzw. beliebig gewählt werden. Aufgrund des notwendigen Energiegleichgewichts führt eine hohe Spannung beim Wechselspannungsanteil zu einer geringeren Stromamplitude beim Wechselstrom und umgekehrt. Um die beiden Gleichspannungsseiten frei von AC-Spannungen und -Strömen zu halten, kommen der vierte Modularm für die erste Gleichspannungsseite und der fünfte Modularm für die zweite Gleichspannungsseite zum Einsatz. Der dritte Modularm bildet in erster Näherung für den Wechselstrom einen Kurzschluss und sorgt dafür, dass der Wechselstrom sich in die Masche einprägen lässt und innerhalb der Masche zirkuliert. An parasitären Elementen der Masche oder, falls vorhanden, an den Modulinduktivitäten fällt die Differenz der an den ersten und zweiten Gleichspannungsanschlüssen anliegenden Spannung ab und erzeugen. Zur Unterdrückung des Wechselspannungsanteil und den damit einhergehenden Wechselströmen an den Gleichspannungsanschlüssen des Gleichspannungswandlers werden der vierte und der fünfte Modularm eingesetzt. Die Dimensionierung dieser Modularme, insbesondere derer Submodule und deren Modulkondensators des Submoduls erfolgt in Abhängigkeit der gewählten ersten Frequenz.

Darüber hinaus ist es möglich, die erste Frequenz über den Betrieb des modularen Gleichspannungswandlers veränderlich zu gestalten.

Es hat sich gezeigt, dass abhängig von dem Modulkondensator die zusätzliche AC Spannung, die der Erzeugung des Wechselstroms dient, klein ist im Vergleich zu der AC Spannung. So beträgt die Amplitude der zusätzlichen AC Spannung in vielen Anwendungen weniger als 10% der Amplitude der AC Spannung.

Zur Sicherstellung des Energiegleichgewichts im Gleichspannungswandler sind, abgesehen von elektrischen Verlusten, die an den Gleichspannungsseiten mittels Gleichspannung und Gleichstrom übertragenen elektrischen Leistungen gleich der innerhalb der Masche mittels Wechselstroms und Wechselspannung übertragenen Leistung. Dies bewirkt, dass die in den Modulkondensatoren gespeicherte Energie im Mittel gleichbleibt und die Modulkondensatoren sich im Mittel weder überladen noch entladen. Weiterhin wird deutlich, dass die Leistungen an den Gleichspannungsseiten gleich ist. Das bedeutet, die Leistung, die an der ersten Gleichspannungsseite in den Gleichspannungswandler hineinfließt, fließt an der zweiten Gleichspannungsseite des Gleichspannungswandlers, abgesehen von elektrischen Verlusten des Gleichspannungswandlers hinaus. Aus diesem Grunde bietet sich an, beispielsweise die Regelung der mittels Wechselspannung und Wechselstroms übertragenen Leistung in Abhängigkeit von den Spannungen der Modulkondensatoren vorzunehmen.

Durch die ausgeglichene Leistungsbilanz kann ein Energietransfer zwischen den beiden Gleichspannungsseiten durchgeführt werden.

In dem dritten, vierten und fünften Modularm findet kein Umsatz von Wirkleistung statt. Diese tauschen nur Blindleistung aus. Zur Deckung von elektrischen Verlusten kann jedoch die Spannung des dritten Modularms neben dem Gleichspannungsanteil auch einen geringen Wechselspannungsanteil mit erster Frequenz aufweisen, mit dem der Masche Wirkleistung zur Deckung der Verluste entnommen werden kann. Zur Deckung von elektrischen Verlusten kann jedoch die Spannung des vierten und/oder fünften Modularms neben dem Wechselspannungsanteil mit erster Frequenz auch einen geringen Gleichspannungsanteil aufweisen, mit dem über dem Gleichstrom an den jeweiligen Gleichspannungsanschlüssen Wirkleistung zur Deckung der Verluste entnommen werden kann.

Die vorgeschlagene Schaltung für den Gleichspannungswandler bietet zahlreiche Möglichkeiten zur idealen Leistungsskalierung. Die freie Wahl der ersten Frequenz erlaubt eine optimale Ausnutzung der eingesetzten Komponenten. Durch die Möglichkeit zur freien Justierung des Wechselspannungsanteils und des Wechselstroms in der Masche ist es möglich, die Anzahl der zu installierenden Submodule in den Modularmen optimal an die Bedürfnisse der zu übertragenden Leistung anzupassen. Die Schaltung ist ebenfalls in der Lage, auftretende Kurzschlüsse an den Gleichspannungsanschlüssen einer der Gleichspannungsseiten oder an beiden Gleichspannungsseiten ohne Abschaltung des Gleichspannungswandlers zu beherrschen. Mit anderen Worten können diese Störungen auf einer oder beiden Gleichspannungsseiten durchfahren werden.

Bei einer vorteilhaften Ausgestaltung der Erfindung umfassen alle Submodule des vierten Modularms und des fünften Modularms jeweils mindestens vier Halbleiterschalter und mindestens einen Modulkondensator. Der vierte und der fünfte Modularm erzeugen im Wesentlichen eine Wechselspannung. Der Gleichspannungsanteil ist gegenüber der Amplitude des Wechselspannungsanteils vernachlässigbar. Somit bewegt sich die Spannung nahezu symmetrisch um eine Nulllinie, nimmt also genauso hohe positive wie negative Werte an. Zur Bildung einer solchen Spannung sind Vollbrückenmodule besonders vorteilhaft nutzbar, da diese ebenfalls eine um eine Nulllinie symmetrische Spannung erzeugen können. Zur Bildung einer Wechselspannung sind dann nur wenige Submodule erforderlich. Dadurch sind die entsprechenden Modularme besonders kostengünstig realisierbar.

Bei einer weiteren vorteilhaften Ausgestaltung der Erfindung weist der erste Modularm eine erste Modularminduktivität und/oder der zweite Modularm eine zweite Modularminduktivität auf. Die Modularminduktivität bzw. Modularminduktivitäten bewirkt eine Glättung des Stroms in der Masche. Insbesondere der durch den Wechselspannungsanteil erzeugte Wechselstrom innerhalb der Masche wird geglättet. Dieser wird durch eine zusätzliche AC Spannung erzeugt, die dann über den Modularminduktivitäten anliegt. Darüber hinaus verbessern die Modularminduktivitäten das Regel- und/oder Steuerverhalten des Gleichstroms an den Gleichspannungsanschlüssen. Weiter bewirken die Modularminduktivitäten dabei auch eine Glättung des Gleichstroms an den Gleichspannungsanschlüssen des Gleichspannungswandlers. Darüber hinaus werden störende Effekte der Wechselspannung an den Gleichspannungsanschlüssen weiter reduziert und unterdrückt. Darüber hinaus

Die Modularminduktivität muss nicht notwendigerweise durch ein einzelnes Bauteil wie eine Spule realisiert werden. Es besteht die Möglichkeit, die Modularminduktivität der Modularme durch zwei, drei oder noch mehr Elemente mit induktivem Verhalten zu realisieren.

Die erste Modularminduktivität und die zweite Modularminduktivität verbessern das Regelverhalten der Gleichströme und unterdrücken bzw. reduzieren die Auswirkungen des Wechselspannungsanteils der Modularme auf die jeweilige Gleichspannungsseite des Gleichspannungswandlers.

Bei einer weiteren vorteilhaften Ausgestaltung der Erfindung ist die erste Anzahl von Submodulen größer als die zweite Anzahl von Submodulen. Der vorgeschlagene Aufbau des Gleichspannungswandlers lässt sich auf besonders einfache Weise Dimensionieren. Auf der Oberspannungsseite werden zum Aufbringen einer höheren Gleichspannung dann mehr Submodule benötigt als auf der Unterspannungsseite. Ein derartiger Aufbau ist besonders kostengünstig herstellbar.

Bei einer weiteren vorteilhaften Ausgestaltung der Erfindung weist der erste Modularm und/oder der zweite Modularm eine Parallelschaltung von in einer Reihenschaltung angeordneten Submodulen auf. Um eine besonders gute Leistungsskalierung zu erreichen, kann der erste Modularm und/oder der zweite Modularm eine Parallelschaltung von Submodulen oder von einer Reihenschaltung von Submodulen aufweisen. Dabei sind zwei oder mehr Reihenschaltungen von Submodulen in einer Parallelschaltung angeordnet. Für ein gutes Regel- oder Steuerverhalten hat es sich als vorteilhaft erwiesen, dass die Reihenschaltungen von Submodulen jeweils eine Modularminduktivität aufweisen. Mit dieser Modularminduktivität lassen lässt sich die Aufteilung der Ströme auf die parallelen Reihenschaltungen auf einfache Art steuern oder regeln. Dadurch wird nicht nur eine einfache Steuerung der Stromaufteilung auf die parallelen Reihenschaltungen sichergestellt, sondern auch eine Verbesserung des Regelverhaltens für den Leistungsaustausch mittels Wechselspannungsanteil erreicht. Durch die Parallelschalschaltung lässt sich der modulare Gleichspannungswandler auf einfache Weise mit gleichen Bauteilen wie Submodulen in seiner Leistungsfähigkeit skalieren.

Bei einer weiteren vorteilhaften Ausgestaltung der Erfindung sind die Submodule des ersten und zweiten Modularms als unipolare Submodule ausgebildet. Unipolaren Submodulen sind Submodule, die an ihren Anschlüssen nur eine Spannung mir einer Polarität erzeugen können. Beispiele für unipolare Submodule sind das Halbbrückenmodule und das Doppelhalbbrückenmodul, die unten näher beschreiben werden. Die Polarität der durch den ersten und zweiten Modularm zu erzeugenden Spannung ändert sich jeweils, wenn die Spannungshöhe des Wechselspannungsanteils, insbesondere die Amplitude der Wechselspannungsanteils mit der ersten Frequenz des ersten Modularms und des zweiten Modularms, kleiner ist als der Betrag der Spannung des Gleichspannungsanteils des jeweiligen Modularms. Daher ist bei einer vorteilhaften Ausgestaltung der Erfindung die Spannungshöhe des Wechselspannungsanteils, insbesondere die Amplitude der Wechselspannungsanteils mit der ersten Frequenz des ersten Modularms und des zweiten Modularms, kleiner ist als der Betrag der Spannung des Gleichspannungsanteils des jeweiligen Modularms. Die Spannungshöhe ist dabei der maximale Betrag der Spannung, mit der der Wechselanteil um seinen Mittelwert schwingt. Bei einem Wechselanteil, bei dem nur eine Schwingung mit einer Frequenz vorliegt, ist dies die Amplitude der Schwingung. Ist diese Spannungshöhe bzw. die Amplitude des Wechselanteil geringer als der Gleichspannungsanteil, so liegt an dem Modularm nur eine Spannung mit einer Polarität an. In diesem Fall können für den Modularm unipolare Submodule vorgesehen werden, die besonders kostengünstig und einfach in der Regelung und Steuerung sind.

Bei einer weiteren vorteilhaften Ausgestaltung der Erfindung wird zwischen dem Wechselspannungsanteil mit erster Frequenz des ersten Modularms und dem Wechselspannungsanteil mit erster Frequenz des zweiten Modularms eine Phasendifferenz in Abhängigkeit der von dem modularen Gleichspannungswandler zu übertragenden elektrische Leistung und/oder in Abhängigkeit von den Spannungen der Modulkondensatoren erzeugt. Wird die Phasendifferenz zwischen den Wechselspannungsanteilen des ersten Modularms und des zweiten Modularms als Stellgröße verwendet, so hat sich gezeigt, dass sich eine besonders dynamische Regelung des Gleichspannungswandlers erzielen lässt, da die Phasendifferenz einen direkten physikalischen Zusammenhang zum Wirkleitungsaustausch zwischen der ersten Gleichspannungsseite und der zweiten Gleichspannungsseite über den Wechselspannungsanteil und dem Wechselstrom hat.

Bei einer weiteren vorteilhaften Ausgestaltung der Erfindung wird die Spannungshöhe des Gleichspannungsanteils in Abhängigkeit der von dem Gleichspannungswandler zu übertragenden elektrische Leistung und/oder in Abhängigkeit von den Spannungen der Modulkondensatoren erzeugt. Die Spannungshöhe des Gleichspannungsanteils ist der Betrag des Gleichspannungsanteils. Mit dieser Regelung lässt sich in einer übergeordneten Leistungsregelung der Leistungsaustausch zwischen der ersten Gleichspannungsseite und der zweiten Gleichspannungsseite auf besonders einfache Weise mit wenig Aufwand kostengünstig steuern oder regeln. Dabei hat es sich als vorteilhaft erwiesen, den Gleichspannungsanteil nur einer der beiden Gleichspannungsseiten mittels dieses Verfahrens zu steuern oder zu regeln, während die andere Gleichspannungsseite die Spannung zwischen den beiden jeweiligen Gleichspannungsanschlüssen gesteuert oder geregelt wird.

Bei einer weiteren vorteilhaften Ausgestaltung der Erfindung wird die Spannungshöhe des Gleichspannungsanteils in Abhängigkeit von der Spannung zwischen den Gleichspannungsanschlüssen einer der Gleichspannungsseiten gesteuert oder geregelt. Für die Verbindung eines Verbrauchers mit einem Gleichspannungsnetz hat es sich als vorteilhaft erwiesen, die Spannung zwischen den Gleichspannungsanschlüssen der Gleichspannungsseite, an dem der Verbraucher angeschlossen ist, zu steuern oder zu regeln. In diesem Fall bekommt der Verbraucher die notwendige Betriebsspannung bereitgestellt und kann je nach Betriebsfall dem Gleichspannungsnetz elektrische Energie entnehmen oder bei Bedarf elektrische Energie in dieses Gleichspannungsnetz zurückspeisen.

Bei einer weiteren vorteilhaften Ausgestaltung der Erfindung wird die Spannungshöhe des Wechselspannungsanteils, insbesondere die Amplitude der Wechselspannungsanteils mit der ersten Frequenz, und die Phasendifferenz zwischen dem Wechselspannungsanteil des ersten Modularms und dem Wechselspannungsanteil des zweiten Modularms derart erzeugt, dass eine erste elektrische Leistung aus dem Wechselspannungsanteil einer zweiten elektrischen Leistung aus dem Gleichspannungsanteil entspricht. Die Leistungen aus dem Wechselspannungsanteil und die Leistung aus dem Gleichspannungsanteil unterscheiden sich nur um die elektrischen Verluste. Dabei ist mit der Leistung aus dem Wechselspannungsanteil die Wirkleistung gemeint, die sich aus dem Wechselspannungsanteil der Spannung und dem Wechselspannungsanteil des Stroms durch den jeweiligen Modularm ergibt. Mit der Leistung aus dem Gleichspannungsanteil ist die Wirkleistung gemeint, die sich aus dem Gleichspannungsanteil der Spannung und dem Gleichspannungsanteil des Stroms durch den jeweiligen Modularm ergibt. Auf diese besonders einfache Weise lässt sich über längere Zeit, d.h. über mindestens 10 Periodendauern der ersten Frequenz, ein stabiles Verhalten des modularen Gleichspannungswandlers erreichen.

Bei einer weiteren vorteilhaften Ausgestaltung der Erfindung ändert sich die erste Frequenz während des Betriebs des modularen Gleichspannungswandlers. Alle Modularme können einen Wechselspannungsanteil mit beliebiger Frequenz erzeugen. Da der vorgeschlagene modulare Gleichspannungswandler keine vorhandenen Resonanzfrequenzen von passiven Bauelementen nutzt, die über den Betrieb konstant sind, nutzt, kann die erste Frequenz beliebig gewählt und auch während des Betriebs verändert werden. Stellt sich beispielsweise bei dem Betrieb des modularen Gleichspannungswandlers heraus, dass durch die Erzeugung eines Wechselspannungsanteils mit der ersten Frequenz eine Resonanz in dem Gleichspannungsnetz angeregt wird, kann der modulare Gleichspannungswandler die erste Frequenz derart verändern, dass es zu keinen Resonanzanregungen mehr kommt. Damit lässt sich ein besonders stabiler und robuster Betrieb in einem Gleichspannungsnetz sicherstellen.

Des Weiteren ist es auch möglich, die erste Frequenz abhängig vom Arbeitspunkt des Gleichspannungswandlers zu verändern. So kann die erste Frequenz abhängig von den Anforderungen an den Gleichspannungswandler, beispielsweise abhängig von Anforderungen an die Dynamik oder an die elektrischen Verluste, verändert werden. Dabei können beispielsweise in Arbeitspunkten mit einer hohen Dynamik die erste Frequenz höher gewählt werden als bei einem verlustarmen Betrieb.

Bei einer weiteren vorteilhaften Ausgestaltung der Erfindung weist die Spannung des erste Modularms und des zweite Modularms jeweils einen weiteren Wechselspannungsanteil mit einer zweiten Frequenz auf. Dabei kann der Wechselspannungsanteil mit der zweiten Frequenz dazu genutzt werden, die Spannungshöhe der Spannung des betreffenden Modularms, zu reduzieren. Bei der Reduktion der Spannungshöhe nimmt der Betrag des Wechselspannungsanteils nur kleinere Werte an als die Amplitude des Wechselspannungsanteils mit erster Frequenz. Als besonders vorteilhaft hat sich dabei eine zweite Frequenz erwiesen, die ein Vielfaches, insbesondere das Dreifache, der ersten Frequenz entspricht. Mit anderen Worten ist die zweite Frequenz ein Vielfaches, insbesondere das Dreifache, der ersten Frequenz. Dadurch kann die Anzahl der Submodule in den Modularmen, insbesondere im ersten, zweiten, vierten und fünften Modularm reduziert werden. Alternativ kann bei einer vorgegebenen Anzahl von Modulen der Wechselspannungsanteil mit erster Frequenz derart erhöht werden, dass der für die Übertragung der elektrischen Leistung erforderliche Strom reduziert wird. Dadurch verringern sich die Verluste des modularen Gleichspannungswandlers und dieser hat einen höheren Wirkungsgrad. Mit anderen Worten arbeitet der modulare Gleichspannungswandler effizienter.

Im Folgenden wird die Erfindung anhand der in den Figuren dargestellten Ausführungsbeispiele näher beschrieben und erläutert. Es zeigen:
- FIG 1 bis FIG 3: Ausführungsbeispiele für einen modularen Gleichspannungswandler,
- FIG 4: ein Gleichspannungsnetz und
- FIG 5 bis FIG 7: Ausführungsbeispiele für ein Submodul.

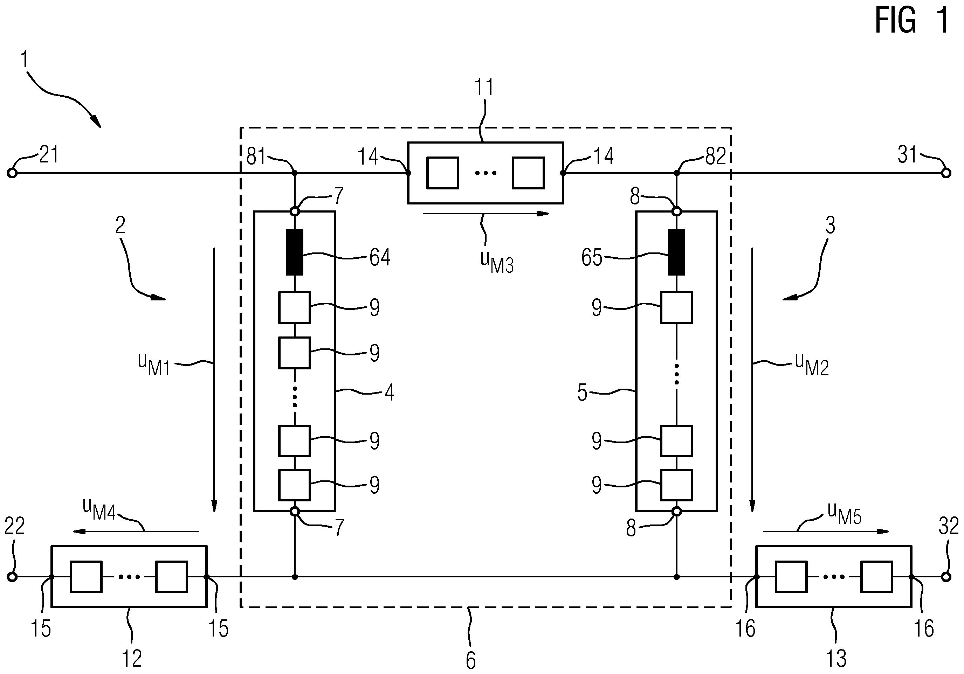

Die FIG 1 zeigt einen modularen Gleichspannungswandler 1. Dieser weist eine erste Gleichspannungsseite 2 mit zwei ersten Gleichspannungsanschlüssen 21, 22 und eine zweite Gleichspannungsseite 3 mit zwei zweiten Gleichspannungsanschlüssen 31, 32 auf. Zwischen den zwei ersten Gleichspannungsanschlüssen 21, 22 ist ein erster Modularm 4 und ein vierter Modularm 12 angeordnet. Ferner ist zwischen den zwei zweiten Gleichspannungsanschlüssen 31, 32 ein zweiter Modularm 5 und ein fünfter Modularm angeordnet. Dabei weist der erste Modularm 4 zwei erste Modularmanschlüsse 7, der zweite Modularm 5 zwei zweite Modularmanschlüsse 8 auf, der dritte Modularm 11 zwei dritte Modularmanschlüsse 14, der vierte Modularm 12 zwei vierte Modularmanschlüsse 15 und der fünfte Modularm 13 zwei fünfte Modularmanschlüsse 16 auf. Zwischen den Modularmanschlüssen 7, 8, 14, 15, 16 ist jeweils eine Reihenschaltung von Submodulen 9 angeordnet. Die Anzahl der Submodule 9 kann sich für die unterschiedlichen Modularme 4, 5, 11, 12, 13 unterscheiden. Die Gleichspannungsseite 2, 3 mit der höheren Betriebsspannung weist dabei vorzugsweise in dem betreffenden ersten und zweiten Modularme 4, 5 eine höhere Anzahl von in Reihe angeordneten Submodulen gegenüber dem anderen Modularm 5, 4 auf. Wenn also die Betriebsspannung der ersten Gleichspannungsseite 2 größer ist als die Betriebsspannung der zweiten Gleichspannungsseite 3, dann ist vorzugsweise die Anzahl der in einer Reihenschaltung angeordneten Submodule 9 des ersten Modularms 4 größer als die Anzahl der in einer Reihenschaltung angeordneten Submodule 9 des zweiten Modularms 5.

Die Modularmanschlüsse 7, 8 der beiden Modularme 4, 5 sind jeweils derart über einen dritten Modularm 11 und einer Verbindung miteinander verbunden, dass sich eine Masche 6 ergibt. Der erste Verbindungspunkt 81 stellt einen Punkt der Masche 6 zwischen dem ersten Modularm 4 und dem dritten Modularm 11 dar. Der zweite Verbindungspunkt 82 stellt einen Punkt der Masche 6 zwischen dem zweiten Modularm 5 und dem dritten Modularm 11 dar. Die jeweiligen Verbindungspunkte 81, 82 sind jeweils direkt oder über den vierten Modularm 12 bzw. fünften Modularm 13 mit einem ersten Anschluss 21, 31 der ersten Gleichspannungsanschlüsse 21, 22 bzw. der zweiten Gleichspannungsanschlüsse 31, 32 verbunden.

Über der Reihenschaltung der Submodule 9 des ersten Modularms 4 wird die Spannung u_{M1} erzeugt, die sich aus der Summe von einem Gleichspannungsanteil und mindestens einem Wechselspannungsanteil zusammensetzt. Über der Reihenschaltung der Submodule 9 des zweiten Modularms 5 wird die Spannung u_{M2} erzeugt, die sich aus der Summe von einem Gleichspannungsanteil und mindestens einem Wechselspannungsanteil zusammensetzt. Über der Reihenschaltung der Submodule 9 des vierten Modularms 12 und des fünften Modularms 13 wird jeweils die Spannung u_{M4} bzw. u_{M5} erzeugt, die einen Wechselspannungsanteil aufweist. Über der Reihenschaltung der Submodule 9 des dritten Modularms 11 wird die Spannung u_{M3} erzeugt, die einen Gleichspannungsanteil aufweist, die der Differenz der Spannungen an den ersten Gleichspannungsanschlüssen 21, 22 und der zweiten Gleichspannungsanschlüssen 31, 32 entspricht.

Der vierte Modularm 12 und der fünfte Modularm 13 sind außerhalb der Masche 6 angeordnet.

Nicht dargestellt sind die vorhandenen parasitäre Induktivtäten in den elektrischen Verbindungen, da diese gegenüber einer ersten Modulinduktivität 64 im ersten Modularm 4 und einer zweiten Modulinduktivität 65 im ersten Modularm 5 vernachlässigbar sind. Die Modulinduktivitäten 64, 65 verbessert des Regel- und/oder Steuerverhalten bei der Erzeugung der Gleichstrom und Wechselstromanteile im modularen Gleichspannungswandler.

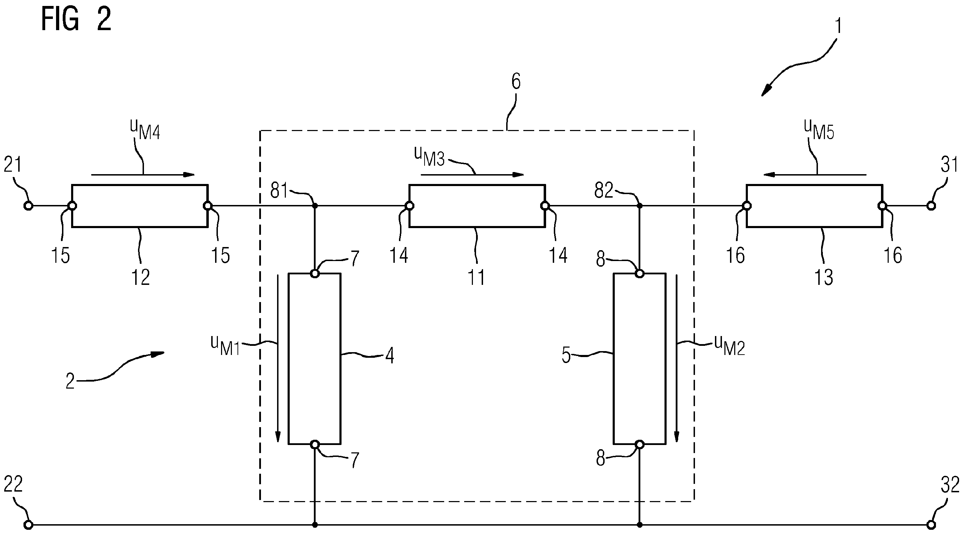

Die FIG 2 zeigt ein weiteres Ausführungsbeispiel des modularen Gleichspannungswandlers 1. Zur Vermeidung von Wiederholungen wird auf die Beschreibung zu der FIG 1 sowie auf die dort eingeführten Bezugszeichen verwiesen. Im Unterschied zum Ausführungsbeispiel der FIG 1 sind der vierte Modularm 12 und der fünfte Modularm 13 jeweils mit dem anderen der beiden Gleichspannungsanschlüsse 21, 22 bzw. 31, 32 elektrisch verbunden. Der erste Verbindungspunkt 81 ist dann über den vierten Modularm 12 mit dem ersten Gleichspannungsanschluss 21 der zwei ersten Gleichspannungsanschlüsse 21, 22 verbunden. Der zweite Verbindungspunkt 82 ist dann über den fünften Modularm 12 mit dem ersten Gleichspannungsanschluss 21 der zwei ersten Gleichspannungsanschlüsse 21, 22 verbunden. Ebenso ist es alternativ möglich, dass der vierte Modularm 12 sich aufteilt. Dabei sind ein Teil der Submodule 9 des vierten Modularms 12 mit dem ersten Gleichspannungsanschluss 21 der zwei ersten Gleichspannungsanschlüsse 21, 22 und die übrigen Submodule 9 des vierten Modularms 12 mit dem zweiten Gleichspannungsanschluss 22 der zwei ersten Gleichspannungsanschlüsse 21, 22 verbunden. Analog ist es alternativ möglich, dass ein Teil der Submodule 9 des fünften Modularms 13 mit dem ersten Gleichspannungsanschluss 31 der zwei zweiten Gleichspannungsanschlüsse 31, 32 und die übrigen Submodule 9 des fünften Modularms 13 mit dem zweiten Gleichspannungsanschluss 32 der zwei zweiten Gleichspannungsanschlüsse 31, 32 verbunden sind. Dies stellt dann eine Kombination der Ausführungsbeispiele der Figuren 1 und 2 dar.

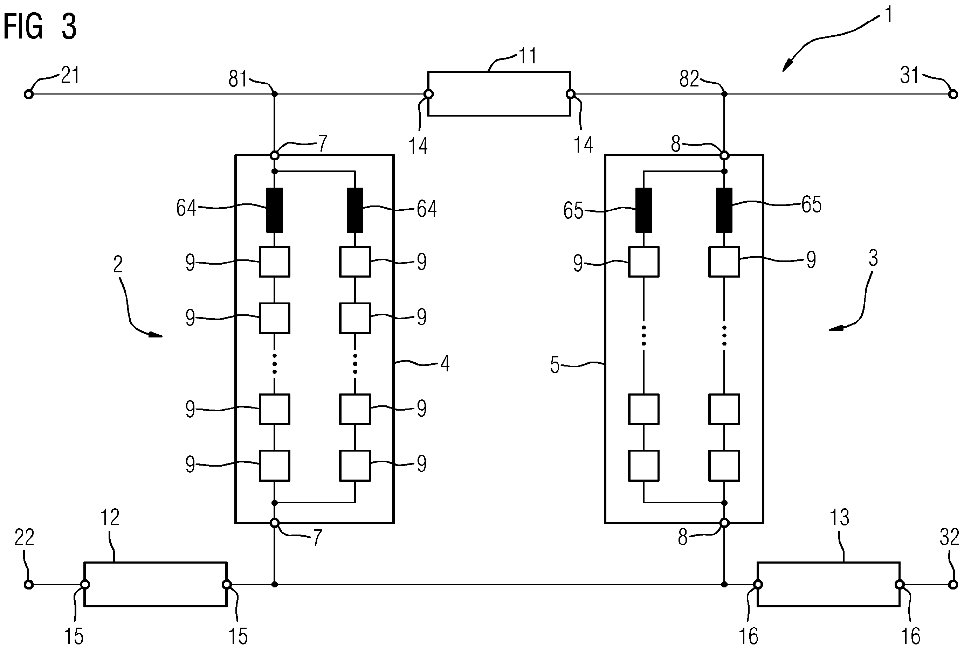

Die FIG 3 zeigt ein weiteres Ausführungsbeispiel des modularen Gleichspannungswandlers 1. Zur Vermeidung von Wiederholungen wird auf die Beschreibung zu den Figuren 1 und 2, sowie auf die dort eingeführten Bezugszeichen verwiesen. Die Modularme 4, 5 weisen in diesem Ausführungsbeispiel jeweils eine Parallelschaltung von in der Reihenschaltung angeordneten Submodulen 9 auf. Zur besseren Steuer- oder Regelbarkeit der Stromaufteilung auf die parallelen Zweige weisen die Reihenschaltungen jeweils eine Modularminduktivität 64, 65 auf. Auch die übrigen Modularme 11, 12, 13 können eine Parallelschaltung von in der Reihenschaltung angeordneten Submodulen 9 aufweisen. Besonders vorteilhaft ist die Parallelschaltung für den ersten und zweiten Modularm, da die Strombelastung dieser Modularme durch die Überlagerung von Wechselstrom und Gleichstrom am größten ist. Ebenso ist die Strombelastung auf der Unterspannungsseite größer, so dass es je nach Verhältnis der Oberspannung zur Unterspannung auch vorteilhaft sein kann, den entsprechenden vierten Modularm 12 bzw. fünften Modularm 13 mit einer Parallelschaltung von in der Reihenschaltung angeordneten Submodulen 9 auszugestalten.

Alternativ zu dem dargestellten Ausführungsbeispiel ist es auch möglich, dass nur einer der Modularme 4, 5, 11, 12, 13 eine Parallelschaltung von in einer Reihenschaltung angeordneten Submodulen 9 aufweist. Wenn die zweite Gleichspannungsseite 3 eine geringere Betriebsspannung hat als die erste Gleichspannungsseite 2, ist es aufgrund der höheren Ströme an den zweiten Gleichspannungsanschlüssen 31, 32 im Vergleich zu den ersten Gleichspannungsanschlüssen 21, 22 vorteilhaft, wenn nur der zweite Modularm 5 einer Parallelschaltung von in einer Reihenschaltung angeordneten Submodule 9 aufweist.

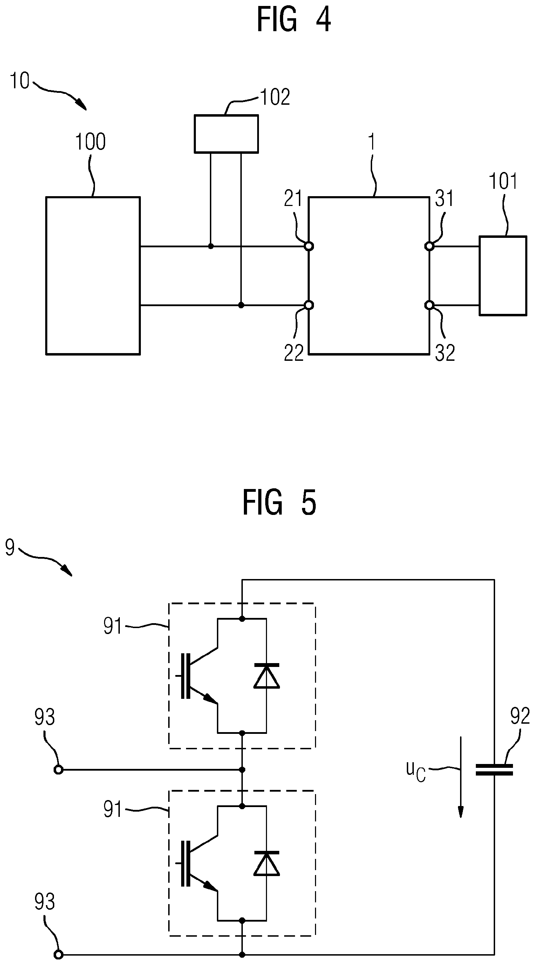

Die FIG 4 zeigt ein Ausführungsbeispiel eines Gleichspannungsnetz 10 mit einem modularen Gleichspannungswandler 1. Dieser kann beispielsweise nach einem der Figuren 1 bis 3 ausgebildet sein.

In dem Gleichspannungsnetz 10 wird eine elektrische Komponente 101 über den modularen Gleichspannungswandler 1 mit einer Gleichspannungsquelle 100 des Gleichspannungsnetzes verbunden. Dies kann beispielsweise dann geschehen, wenn sich die Betriebsspannungen der Gleichspannungsquelle 100 und der elektrischen Komponente 101 unterscheiden. Ebenso ist eine derartige Anordnung sinnvoll, wenn der Energieaustausch zwischen Gleichspannungsquelle 100 und elektrischer Komponente 101 bei gleicher oder unterschiedlicher Betriebsspannung gesteuert oder geregelt werden soll. Die Steuerung oder Regelung kann durch den modularen Gleichspannungswandler 1 realisiert werden. Das Gleichspannungsnetz kann dabei eine Vielzahl von elektrischen Komponenten aufweisen, die über einen modularen Gleichspannungswandler 1 aus einer Gleichspannungsquelle 100 mit elektrischer Energie versorgt werden. Dabei kann jede elektrische Komponente über einen separaten modularen Gleichspannungswandler mit der Gleichspannungsquelle 100 verbunden sein. Alternativ ist es auch möglich, mehrere elektrische Komponenten 101 mit einem modularen Gleichspannungswandler 1 zu verbinden.

Neben den genannten elektrischen Komponenten 101, die über einen modularen Gleichspannungswandler 1 mit der Gleichspannungsquelle 100 des Gleichspannungsnetzes 10 verbunden sind, kann das Gleichspannungsnetz weitere elektrische Komponenten 102 aufweisen, die direkt, also ohne den modularen Gleichspannungswandler 1 mit der Spannungsquelle 100 verbunden sind.

Bei der elektrischen Komponente 101 und/oder weiteren elektrischen Komponente 102 kann es sich auch um Teilnetz handeln, die eine Vielzahl von elektrischen Quellen und Verbrauchern aufweisen.

Die FIG 5 zeigt ein Ausführungsbeispiel eines Submoduls 9. Das Submodul 9, auch als Halbbrückenmodul bezeichnet, weist zwei Halbleiterschalter 91 und einen Kondensator 92 auf. Zwischen den Anschlüssen 93 des Submoduls 9 kann mittels Schalthandlungen der Halbleiterschalter 91 die Spannung null oder die Kondensatorspannung u_{c} angelegt werden.

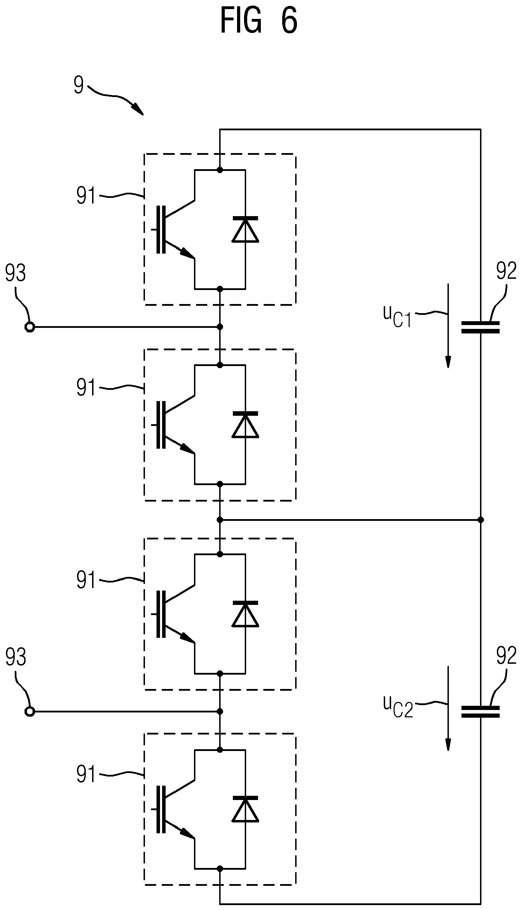

Die FIG 6 zeigt ein weiteres Ausführungsbeispiel eines Submoduls 9. Das Submodul 9, auch als Doppelhalbbrückenmodul bezeichnet, weist vier Halbleiterschalter 91 und zwei Kondensator 92 auf. Zwischen den Anschlüssen 93 des Submoduls 9 kann mittels Schalthandlungen der Halbleiterschalter 91 die Spannung null oder die Spannung eines oder beider Kondensatoren 92 angelegt werden.

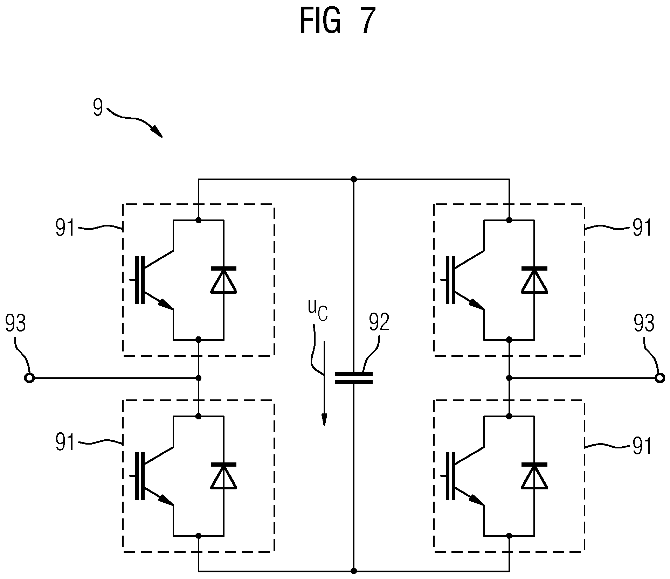

Die FIG 7 zeigt ein weiteres Ausführungsbeispiel eines Submoduls 9. Das Submodul 9, auch als Vollbrückenmodul bezeichnet, weist vier Halbleiterschalter 91 und einen Kondensator 92 auf. Zwischen den Anschlüssen 93 des Submoduls 9 kann mittels Schalthandlungen der Halbleiterschalter 91 die Spannung null oder die positive oder negative Spannung u_{c} des Kondensatoren 92 angelegt werden.

Es sei angemerkt, dass sich die Ausführungsbeispiele und die genannten Vorteile insbesondere zur Erreichung von spezifizierten Anforderungen beliebig miteinander kombinieren lassen.

Zusammenfassend betrifft die Erfindung einen modularen Gleichspannungswandler 1 aufweisend eine erste Gleichspannungsseite 2, eine zweite Gleichspannungsseite 3, einen ersten Modularm 4 und einen zweiten Modularm 5. Dabei weist der modulare Gleichspannungswandler 1 ferner einen dritten Modularm 11, einen vierten Modularm 12 und einen fünften Modularm 13 auf, wobei zwischen den zwei ersten Gleichspannungsanschlüssen 21,22 der erste Modularm 4 und der vierte Modularm 12 in Reihe angeordnet sind, wobei zwischen den zwei zweiten Gleichspannungsanschlüssen 31,32 der zweite Modularm 5 und der fünfte Modularm 13 in Reihe angeordnet sind, wobei der erste Modularm 4, der zweite Modularm 5 und der dritte Modularm 11 derart in Reihe angeordnet sind, dass sich eine Masche 6 bildet, wobei zwischen den jeweiligen Modularmanschlüssen jeweils Submodule 9 in einer Reihenschaltung angeordnet sind, wobei der erste Modularm 4 und der zweite Modularm 5 eingerichtet sind, jeweils eine Spannung u_{M1},u_{M2} zu erzeugen, die einen Gleichspannungsanteil und einen Wechselspannungsanteil mit einer ersten Frequenz f₁ aufweist. Die Erfindung betrifft ferner ein Gleichspannungsnetz 10 mit einem derartigen Gleichspannungswandler 1. Weiter betrifft die Erfindung ein Verfahren zum Betreiben eines derartigen modularen Gleichspannungswandlers 1 oder eines derartigen Gleichspannungsnetzes 10.

## Patentansprüche

1. Modularer Gleichspannungswandler (1) aufweisend
- eine erste Gleichspannungsseite (2) mit zwei ersten Gleichspannungsanschlüssen (21,22),
- eine zweite Gleichspannungsseite (3) mit zwei zweiten Gleichspannungsanschlüssen (31,32),
- einen ersten Modularm (4) mit zwei ersten Modularmanschlüssen (7),
- einen zweiten Modularm (5) mit zwei zweiten Modularmanschlüssen (8),
- einen dritten Modularm (11) mit zwei dritten Modularmanschlüssen (14),
- einen vierten Modularm (12) mit zwei vierten Modularmanschlüssen (15) und
- einen fünften Modularm (13) mit zwei fünften Modularmanschlüssen (16),
wobei zwischen den zwei ersten Gleichspannungsanschlüssen (21,22) der erste Modularm (4) und der vierte Modularm (12) in Reihe angeordnet sind, wobei zwischen den zwei zweiten Gleichspannungsanschlüssen (31,32) der zweite Modularm (5) und der fünfte Modularm (13) in Reihe angeordnet sind, wobei der erste Modularm (4), der zweite Modularm (5) und der dritte Modularm (11) derart in Reihe angeordnet sind, dass sich eine Masche (6) bildet, wobei der vierte Modularm (12) und der fünfte Modularm (13) jeweils außerhalb der Masche (6) angeordnet sind, wobei zwischen den zwei ersten Modularmanschlüssen (7) des ersten Modularms (4) eine erste Anzahl von Submodulen (9) in einer Reihenschaltung angeordnet ist, zwischen den zwei zweiten Modularmanschlüssen (8) des zweiten Modularms (5) eine zweite Anzahl von Submodulen (9) in einer Reihenschaltung angeordnet ist, zwischen den zwei dritten Modularmanschlüssen (14) des dritten Modularms (11) eine dritte Anzahl von Submodulen (9) in einer Reihenschaltung angeordnet ist, zwischen den zwei vierten Modularmanschlüssen (15) des vierten Modularms (12) eine vierte Anzahl von Submodulen (9) in einer Reihenschaltung angeordnet ist, zwischen den zwei fünften Modularmanschlüssen (16) des fünften Modularms (13) eine fünfte Anzahl von Submodulen (9) in einer Reihenschaltung angeordnet ist,
wobei die Submodule (9) jeweils mindestens zwei Halbleiterschalter (91) und mindestens einen Modulkondensator (92) umfassen, wobei mindestens ein Submodul (9) des vierten Modularms (12) und des fünften Modularms (13) jeweils mindestens vier Halbleiterschalter (91) und mindestens einen Modulkondensator (92) umfasst, wobei der erste Modularm (4) und der zweite Modularm (5) eingerichtet sind, jeweils eine Spannung (u_{M1},u_{M2}) zu erzeugen, die einen Gleichspannungsanteil und einen Wechselspannungsanteil mit einer ersten Frequenz (f₁) aufweist, wobei der dritte Modularm (11) eingerichtet ist, eine Spannung (u_{M3}) zu erzeugen, die einen Gleichspannungsanteil aufweist, wobei der vierte Modularm (12) und der fünfte Modularm (13) eingerichtet sind, jeweils eine Spannung (u_{M4},u_{M5}) zu erzeugen, die einen Wechselspannungsanteil mit einer ersten Frequenz (f₁) aufweist.

2. Modularer Gleichspannungswandler (1) nach Anspruch 1, wobei alle Submodule (9) des vierten Modularms (12) und des fünften Modularms (13) jeweils mindestens vier Halbleiterschalter (91) und mindestens einen Modulkondensator (92) umfassen.

3. Modularer Gleichspannungswandler (1) nach einem der Ansprüche 1 oder 2, wobei der erste Modularm (4) eine erste Modularminduktivität (64) und/oder der zweite Modularm (5) eine zweite Modularminduktivität (65) aufweist.

4. Modularer Gleichspannungswandler (1) nach einem der Ansprüche 1 bis 3, wobei die erste Anzahl von Submodulen (9) größer ist als die zweite Anzahl von Submodulen (9).

5. Modularer Gleichspannungswandler (1) nach einem der Ansprüche 1 bis 4, wobei der erste Modularm (4) und/oder der zweite Modularm (5) eine Parallelschaltung von in einer Reihenschaltung angeordneten Submodulen (9) aufweist.

6. Modularer Gleichspannungswandler (1) nach einem der Ansprüche 1 bis 5, wobei die Submodule (9) des ersten und zweiten Modularms (4,5) als unipolare Submodule ausgebildet sind.

7. Gleichspannungsnetz (10) mit mindestens einem modularen Gleichspannungswandler (1) nach einem der Ansprüche 1 bis 6 und einer Gleichspannungsquelle (100), wobei der modulare Gleichspannungswandler (1) eine elektrische Komponente (101) mit der Spannungsquelle (100) elektrisch verbindet, wobei die Gleichspannungsquelle (100) und die elektrische Komponente (101) unterschiedliche Betriebsspannungen aufweisen.

8. Verfahren zum Betreiben eines modularen Gleichspannungswandlers (1) nach einem der Ansprüche 1 bis 6 oder eines Gleichspannungsnetzes (10) nach Anspruch 7, wobei der erste Modularm (4) und der zweite Modularm (5) jeweils eine Spannung (u_{M1}, u_{M2}) mit einem Gleichspannungsanteil und einem Wechselspannungsanteil mit einer ersten Frequenz (f₁) erzeugen, wobei sich der Gleichspannungsanteil und der Wechselspannungsanteil derart überlagern, dass der jeweilige Gleichspannungsanteil und der jeweilige Wechselspannungsanteil als Summe zwischen den Modularmanschlüssen (7,8) des jeweiligen Modularms (4,5) anliegen, wobei der vierte Modularm (12) und der fünfte Modularm (13) jeweils eine Spannung (u_{M4}, u_{M5}) mit einem Wechselspannungsanteil mit der ersten Frequenz (f₁) derart erzeugen, dass
- die Spannungshöhe des Wechselspannungsanteil, insbesondere die Amplitude des Wechselspannungsanteils, des vierten Modularms (12) identisch ist mit der Spannungshöhe des Wechselspannungsanteil, insbesondere mit der Amplitude des Wechselspannungsanteils, des ersten Modularms (4),
- eine Phasenverschiebung zwischen dem Wechselspannungsanteil des ersten Modularms (4) und dem Wechselspannungsanteil des vierten Modularms (12) einen Wert von 180° annimmt,
- die Spannungshöhe des Wechselspannungsanteil, insbesondere die Amplitude des Wechselspannungsanteils, des fünften Modularms (13) identisch ist mit der Spannungshöhe des Wechselspannungsanteil, insbesondere mit der Amplitude des Wechselspannungsanteils, des zweiten Modularms (5),
- eine Phasenverschiebung zwischen dem Wechselspannungsanteil des zweiten Modularms (5) und dem Wechselspannungsanteil des fünften Modularms (13) einen Wert von 180° annimmt,
wobei der dritte Modularm (11) eine Spannung (u_{M3}) mit einem Gleichspannungsanteil erzeugt, die derart eingerichtet ist, einen Gleichstrom zwischen den ersten Gleichspannungsanschlüssen (21,22) der ersten Gleichspannungsseite (2) und den zweiten Gleichspannungsanschlüssen (31,32) der zweiten Gleichspannungsseite (3) zu verhindern.

9. Verfahren nach Anspruch 8, wobei die Spannungshöhe des Wechselspannungsanteils, insbesondere die Amplitude der Wechselspannungsanteils mit der ersten Frequenz (f₁) des ersten Modularms (4) und des zweiten Modularms (5), kleiner ist als der Betrag der Spannung des Gleichspannungsanteils des jeweiligen Modularms (4,5).

10. Verfahren nach einem der Ansprüche 8 oder 9, wobei zwischen dem Wechselspannungsanteil mit erster Frequenz (f₁) des ersten Modularms (4) und dem Wechselspannungsanteil mit erster Frequenz (f₁) des zweiten Modularms (5) eine Phasendifferenz in Abhängigkeit der von dem modularen Gleichspannungswandler (1) zu übertragenden elektrischen Leistung und/oder in Abhängigkeit von Spannungen (u_{c}) der Modulkondensatoren (92) erzeugt wird.

11. Verfahren nach einem der Ansprüche 8 bis 10, wobei die Spannungshöhe des Gleichspannungsanteils in Abhängigkeit der von dem modularen Gleichspannungswandler (1) zu übertragenden elektrischen Leistung und/oder in Abhängigkeit von den Spannungen (u_{c}) der Modulkondensatoren (92) erzeugt wird.

12. Verfahren nach einem der Ansprüche 7 bis 11, wobei die Spannungshöhe des Gleichspannungsanteils in Abhängigkeit von der Spannung zwischen den Gleichspannungsanschlüssen (21,22 bzw. 31,32) einer der Gleichspannungsseiten (2,3) gesteuert oder geregelt wird.

13. Verfahren nach einem der Ansprüche 7 bis 12, wobei die Spannungshöhe des Wechselspannungsanteils, insbesondere die Amplitude der Wechselspannungsanteils mit der ersten Frequenz (f₁), und die Phasendifferenz zwischen dem Wechselspannungsanteil des ersten Modularms (4) und dem Wechselspannungsanteil des zweiten Modularms (5) derart erzeugt werden, dass eine erste elektrische Leistung aus dem Wechselspannungsanteil einer zweiten elektrischen Leistung aus dem Gleichspannungsanteil entspricht.

14. Verfahren nach einem der Ansprüche 7 bis 13, wobei die erste Frequenz sich während des Betriebs des modularen Gleichspannungswandlers (1) ändert.

15. Verfahren nach einem der Ansprüche 7 bis 14, wobei die Spannung (u_{M1}, u_{M2}) des erste Modularms (4) und des zweite Modularms (5) jeweils einen weiteren Wechselspannungsanteil mit einer zweiten Frequenz (f₂) aufweist.
